# EUROPÄISCHE PATENTSCHRIFT

(11) **EP 3 237 277 B1**
(45) Veröffentlichungstag und Bekanntmachung des Hinweises auf die Patenterteilung: **31.10.2018**
(21) Anmeldenummer: 15825910.1
(22) Anmeldetag: 22.12.2015
(51) Int. Cl.: B63B 35/44

(54) **SCHWIMMENDE PLATTFORM**
FLOATING PLATFORM
PLATEFORME FLOTTANTE

(30) Priorität: 22.12.2014 AT 509362014
(43) Veröffentlichungstag der Anmeldung: 01.11.2017
(73) Patentinhaber: Swimsol GmbH, 1040 Wien (AT)
(72) Erfinder: PRASCHL, Alexander, 1040 Wien (AT); MIKATS, Thomas, 1040 Wien (AT); PUTSCHEK, Martin, 1040 Wien (AT)
(74) Vertreter: Sonn & Partner Patentanwälte
(86) Internationale Anmeldenummer: PCT/AT2015/050325
(87) Internationale Veröffentlichungsnummer: WO 2016/100995

(56) Entgegenhaltungen:
- EP-B1- 2 270 404
- WO-A1-02/28704
- WO-A2-2014/167368
- US-A- 4 869 192

## Beschreibung

Im Stand der Technik sind bereits verschiedene schwimmende Plattformen im Halbtaucherprinzip bekannt geworden. Solche Plattformen, englisch als "Semi-Submersibles" bezeichnet, weisen ein Deck ober Wasser und eine Basis unter Wasser auf. An der Basis sind Schwimmkörper vorgesehen, welche den Auftrieb für die Plattform zur Verfügung stellen. Die Schwimmkörper sind möglichst tief angeordnet, da die Wellenkräfte mit der Tiefe abnehmen. Die Basis kann über Säulen mit einer Deckfläche verbunden sein. Wenn die Säulen hohl ausgeführt sind, wirken die Säulen vertikalen Bewegungen der Plattform, beispielsweise durch Winddruck, entgegen. Beim Stand der Technik sind gleichartige Säulen vorgesehen, welche im Wesentlichen in demselben Außmaß in das Gewässer eintauchen.

Beispiele für solche Halbtaucher-Plattformen sind in der US 4 909 174, US 8,220,407 oder EP 0 359 702 beschrieben.

WO 0228704 A1 beschreibt eine schwimmende Plattform für Bohrungen auf dem Meer. Die Plattform umfasst einen oberen Teil, der über teils ober-, teils unterhalb der Wasseroberfläche angeordnete Säulen mit einem Ponton unterhalb der Wasseroberfläche verbunden ist. Die Säulen sind jedoch ident ausgebildet, so dass die Säulen im Gleichgewichtszustand dieselben Verdrängungsvolumina oberhalb und unterhalb der Wasseroberfläche aufweisen. Durch den Einfluss von Wellenbewegungen kann die Plattform ungleichmäßig aus dem Wasser gehoben werden.

In der US 4,869,192 A ist ein "semi-submersible" gezeigt, bei welchem eine Deckstruktur auf Säulen abgestützt ist. Unter Wasser sind Pontone angeordnet. An den Säulen sind weiters Elemente verschieblich gelagert, mit welchen die Stabilität der Plattform gewährleistet werden soll. Für den Transport der Plattform werden die Elemente benachbart der Pontone angeordnet. Im Normalbetrieb sind die Elemente unter Wasser angeordnet. Bei Auftreten eines Sturmes werden die Elemente entsichert und entlang der Säulen aufwärts verschoben. Weiters ist eine Anordnung der Plattform bei Wellengang gezeigt.

Dokument WO 2014/167368 A2 bezieht sich auf eine Plattform mit verschiedenen Auftriebskörpern.

Die US 3,648,638 A beschreibt eine am Meeresboden verankerte Plattform. Die Plattform wird durch Säulen gestützt, die jeweils im gleichen Ausmaß in das Gewässer eintauchen. Die Säulen sind durch ein verlängertes Gestänge am Grund des Gewässers verankert. Diese Verankerung ist nötig, da die Plattform einem starken Wellengang ausgesetzt ist. Die erfindungsgemäße Anordnung der Stabilisierungskörper wird dadurch nicht vorweggenommen.

Die US 3,490,406 A beschreibt eine Plattform auf teilweise ins Gewässer eintauchenden Säulen, die auf einem unterhalb der Wasseroberfläche angeordneten Ponton befestigt sind. Diese Stützkonstruktion ist wiederum mittels Ankerketten am Grund des Gewässers befestigt.

Die US 3,160,135 A beschreibt eine Konstruktion zur Stabilisierung von schwimmenden Plattformen. Zu diesem Zweck sind drei gleichartige Stabilisierungssäulen über Querverspannungen miteinander verbunden, um die Plattform abzustützen.

Die WO 0200496 A1 offenbart eine Plattform für Bohrarbeiten, die aus einer oberen Plattform, gleichartigen Säulen und einem unter der Wasseroberfläche befindlichen Ponton besteht.

Die WO 2004067372 A1 beschreibt eine schwimmende Plattform, die ein Deck, vertikale Säulen und ein Ponton umfasst. Die Konstruktion ist durch Ketten am Grund des Gewässers verankert. Auch hier sind die Säulen gleichartig ausgebildet.

Die FR 2,881,102 A1 beschreibt eine schwimmende Plattform, die ein Arbeitsdeck und vier Stützelemente umfasst. Weiters ist das Deck mit einer Struktur verbunden, die mit dem Grund des Gewässers verankert ist. Die Stützelemente umfassen jeweils ein unter Wasser befindliches Ponton und eine Säule, die teilweise aus dem Wasser herausragt.

Die US 2011126750 A1 beschreibt eine weitere Plattform für Bohrarbeiten auf dem Meer. Die Bohrinsel wird von Pontons, Stützsäulen und Stoßdämpfern getragen. Die Säulen ragen zwar teilweise aus dem Wasser heraus, sind jedoch mit denselben Verdrängungsvolumina unter bzw. über Wasser ausgestattet.

Die JP 2010280301 A beschreibt ein "semi-submersible" für eine Offshore-Anlage. Das "semi-submersible" besteht aus einem zentralen Körper und mehreren außenliegenden Schwimmkörpern, die um den zentralen Körper angeordnet sind. Die Schwimmkörper weisen einen unteren Teil und einen oberen, im Querschnitt kleineren Teil auf. Die einzelnen Schwimmkörper befinden sich in derselben Lage relativ zur Wasseroberfläche.

Die WO 9743171 A1 beschreibt eine weitere Plattform für Ölbohrungen im Meer. Zudem soll die Plattform auch für Landungen von Flugzeugen genutzt werden. Die Plattform wird unter anderem von einer Konstruktion aus Y-förmigen Verbindungsgliedern, die halb unter und halb über der Wasseroberfläche angeordnet sind, getragen.

Die EP 2270404 B1 beschreibt eine schwimmfähige Plattform zur Anordnung von Solarmodulen auf einem Gewässer.
Nachteilig an den bekannten Ausführungen ist jedoch, dass solche Plattformen für kleinere Bauweisen nicht die erforderliche Stabilität im Wasser aufweisen. Als problematisch haben sich insbesondere die Auswirkungen des Wellenganges erwiesen, welcher zu einem ständigen Schaukeln der Plattform führen kann. Dies wäre jedoch für Photovoltaikelemente auf dem Deck schädlich. Dadurch können nachteiligerweise Verformungen bzw. mechanische Belastungen der Photovoltaikelemente auf dem Deck hervorgerufen werden. Das Schaukeln der Plattform ist zudem dahingehend nachteilig, dass der Energieeintrag durch die Strahlung verringert wird. Zudem kann die Effizienz der Energieumwandlung aufgrund von Verlusten im Bereich des Wechselrichters beeinträchtigt werden. Demnach waren die bekannten Plattformen für die Anordnung von Photovoltaikelementen nur sehr eingeschränkt geeignet.

Die Erfindung stellt sich daher der Aufgabe, die Nachteile des Standes der Technik zu lindern bzw. zu beseitigen. Ziel der Erfindung ist es insbesondere, eine schwimmende Plattform zu schaffen, welche mit konstruktiv einfachen Mitteln ein verbessertes Schwimmverhalten erzielt, um selbst bei kleineren Bauformen die stabile Anordnung von Photovoltaikelementen zu ermöglichen.

Diese Aufgabe wird durch eine schwimmende Plattform mit den Merkmalen von Anspruch 1 gelöst. Bevorzugte Ausführungen sind in den abhängigen Ansprüchen angegeben.

Erfindungsgemäß weist ein erster Stabilisierungsauftriebskörper am Auftriebsabschnitt ein größeres Verdrängungsvolumen und am Stabilisierungsabschnitt ein kleineres Verdrängungsvolumen als ein zweiter Stabilisierungsauftriebskörper auf.

Demnach sind bei der erfindungsgemäßen Plattform im Halbtaucherprinzip zwei Typen von Stabilisierungsauftriebskörpern vorgesehen, welche teils oberhalb, teils unterhalb der Wasseroberfläche angeordnet sind und dadurch vertikalen Bewegungen der schwimmenden Plattform, insbesondere aufgrund von Windkräften, entgegenwirken. Die Stabilisierungsauftriebskörper weisen einen Stabilisierungsabschnitt, welcher bei ebener Wasseroberfläche, d.h. im wellenfreien Gleichgewichtszustand, unter Wasser angeordnet ist, und einen Stabilisierungsabschnitt auf, welcher bei ebener Wasseroberfläche über Wasser angeordnet ist. Für die Zwecke dieser Offenbarung beziehen sich Positions- und Richtungsangaben stets auf die Gleichgewichtslage der Plattform, wenn die Wasseroberfläche in Abwesenheit von Wellen eben ist. Der Auftriebsabschnitt und der Stabilisierungsabschnitt weisen jeweils ein Verdrängungsvolumen auf, welches in einem in das Wasser eingetauchten Zustand durch Verdrängung des Wassers eine entsprechende Auftriebskraft hervorruft. Erfindungsgemäß weist der Stabilisierungsauftriebskörper am Auftriebsabschnitt ein größeres Verdrängungsvolumen als am Stabilisierungsabschnitt auf, wogegen der zweite Stabilisierungsauftriebskörper am Auftriebsabschnitt ein kleineres Verdrängungsvolumen als am Stabilisierungsabschnitt aufweist. Dadurch kann die Stabilität der Plattform gegenüber Wellenbewegungen erhöht werden. Durch die Wellen ändert sich die lokal auf die Plattform wirkende Auftriebskraft, indem die Stabilisierungsauftriebskörper je nach Phasenlage der Wellen tiefer oder weniger tief in das Wasser eintauchen. Dadurch können Kippkräfte entstehen, welche das Gleichgewicht der Plattform beeinträchtigen würden. Die unterschiedliche Ausgestaltung der Stabilisierungsauftriebskörper reduziert jedoch die lokale Auftriebsdifferenz, welche sich bei Wellengang ergibt. Bei einer günstigen Phasenlage der Wellen wirken sich diese lediglich im vertikalen Überlappungsbereich zwischen den Stabilisierungsauftriebskörpern auf den Gesamtauftrieb aus. Selbst bei ungünstiger Phasenlage wird jedoch eine Verbesserung gegenüber dem Stand der Technik erzielt, welche aus der reduzierten Auftriebsdifferenz beim Auftreten von Wellen resultiert. Dadurch können die Kippkräfte auf die Plattform selbst bei unruhiger See weitgehend unterbunden werden. Demnach bewirken die Stabilisierungsauftriebskörper ein ruhigeres Schwimmverhalten der Plattform, welche sich daher besonders gut für die Anbringung von Photovoltaikelementen auf See eignet.

Gemäß einer ersten bevorzugten Ausführungsform ist vorgesehen, dass der erste und der zweite Stabilisierungsauftriebskörper im Wesentlichen dieselbe Länge und denselben Querschnittsverlauf aufweisen, wobei der erste und der zweite Stabilisierungsauftriebskörper in Richtung senkrecht zur ebenen Wasseroberfläche um eine Strecke versetzt zueinander angeordnet sind. Bei dieser Ausführung sind daher ident ausgebildete Stabilisierungsauftriebskörper in unterschiedlichen Höhenpositionen, relativ zur ebenen Wasseroberfläche, angeordnet. Die Stabilisierungsauftriebskörper weisen zwischen dem Auftriebs- und dem Stabilisierungsabschnitt bevorzugt einen im Wesentlichen konstanten Querschnitt (senkrecht zu deren Längsrichtung) auf. Alternativ kann der Querschnitt der Stabilisierungsauftriebskörper in deren Längsrichtung variieren, wobei der erste und der zweite Stabilisierungsauftriebskörper im montierten Zustand an der Plattform denselben Querschnittsverlauf in Längsrichtung aufweisen. Bei beiden Ausführungsvarianten sind die Stabilisierungsauftriebskörper bezogen auf deren Volumenschwerpunkt in vertikaler Richtung um eine Strecke versetzt angeordnet, welche vorzugsweise zwischen 10% und 100% der Höhe der Stabilisierungsauftriebskörper (d.h. deren vertikale Erstreckung senkrecht zur Wasseroberfläche), vorzugsweise zwischen 20 % und 80 %, besonders bevorzugt im Wesentlichen 50%, der Höhe der Stabilisierungsauftriebskörper, beträgt. Dadurch weist der erste Stabilisierungsauftriebskörper insbesondere einen längeren Auftriebsabschnitt unterhalb der Wasseroberfläche als der zweite Stabilisierungsauftriebskörper auf, so dass der erste Stabilisierungsauftriebskörper tiefer in das Wasser als der zweite Stabilisierungsauftriebskörper eintaucht. Demgegenüber weist der erste Stabilisierungsauftriebskörper insbesondere einen kürzeren Stabilisierungsabschnitt als der zweite Stabilisierungsauftriebskörper auf, so dass der zweite Stabilisierungsauftriebskörper weiter über die ebene Wasseroberfläche hinausragt. Dies hat zur Folge, dass die Stabilität der schwimmenden Plattform gegenüber Wellenbewegungen auf einfache Weise erhöht wird.

Bei einer alternativen Ausführung weist der erste Stabilisierungsauftriebskörper im montierten Zustand an der Plattform einen anderen Querschnittsverlauf in Längsrichtung als der zweite Stabilisierungskörper auf. Besonders bevorzugt ist es, wenn die Stabilisierungsauftriebskörper dieselbe Längserstreckung aufweisen, wobei der erste Stabilisierungsauftriebskörper im montierten Zustand an der Plattform am Auftriebsabschnitt eine größere Querschnittsfläche und am Stabilisierungsabschnitt eine kleinere Querschnittsfläche als der zweite Stabilisierungsauftriebskörper aufweist. Dadurch ist der Volumenschwerpunkt des ersten Stabilisierungsauftriebskörpers in vertikaler Richtung selbst dann oberhalb des Volumenschwerpunkts des zweiten Stabilisierungsauftriebskörpers angeordnet, wenn die ober- und unterseitigen Enden der Stabilisierungsauftriebskörper im Wesentlichen in derselben Höhe ober bzw. unter Wasser angeordnet sind. Demnach ist es bei dieser Ausführung nicht erforderlich, dass die Stabilisierungsauftriebskörper in vertikaler Richtung zueinander versetzt angeordnet sind, um die unterschiedliche Auftriebswirkung zu erzielen.

Selbstverständlich ist es jedoch auch möglich, verschiedene Ausführungen von Stabilisierungskörper sowie verschiedene Anordnungen von Stabilisierungskörpern relativ zueinander, insbesondere in Bezug auf deren vertikalen Versatz, an derselben Plattform miteinander zu kombinieren.

Hinsichtlich einer ebenso leichten wie stabilen Ausführung der schwimmenden Plattform weist die Verbindungsstruktur zwischen der Deckstruktur und der Basisstruktur erstreckte Längselemente auf, wobei der erste und der zweite Stabilisierungsauftriebskörper jeweils mit einem Längselement der Verbindungsstruktur verbunden sind. Demnach sind die Stabilisierungsauftriebskörper an Längselementen, d.h. an langgestreckten bzw. länglichen, Elementen vorgesehen, welche die Basisstruktur unter Wasser mit der Deckstruktur über Wasser verbinden. Zwischen den Längselementen sind großflächige Durchströmungsöffnungen gebildet. Demnach ist eine offene Verbindungsstruktur vorgesehen, wodurch die Angriffsfläche für äußere Lasten, wie Wind- und Wellenkräften, reduziert werden kann. Die Längselemente sind vorzugsweise durch Profilelemente gebildet, welche einen in Längsrichtung gleichbleibenden Querschnitt aufweisen.

Um die auf die Plattform wirkende Auftriebsdifferenz durch Wellen möglichst gering zu halten, ist es günstig, wenn der erste und der zweite Stabilisierungsauftriebskörper mit benachbarten Längselementen der Verbindungsstruktur verbunden sind. Durch die unterschiedlichen Stabilisierungsauftriebskörper an den benachbarten Längselementen wirken sich Wellen weniger stark auf die Lage der schwimmenden Plattform aus, wodurch ein ruhigeres Schwimmverhalten erzielt wird.

Die Längselemente mit dem ersten und zweiten Stabilisierungsauftriebskörper sind in einer gemeinsamen Ebene angeordnet, welche vorzugsweise zur Vertikalen geneigt ist. Dadurch können die nachteiligen Auswirkungen von Wellenbewegungen auf die Lage der schwimmenden Plattform weiter reduziert werden. Gemäß einer alternativen Ausführung sind die Längselemente im Wesentlichen vertikal angeordnet. Um eine großflächige Deckstruktur für die Photovoltaikelemente zur Verfügung zu stellen, ist die gemeinsame Ebene der Längselemente mit den Stabilisierungsauftriebskörpern vorzugsweise nach außen geneigt, so dass die horizontale Erstreckung der Verbindungsstruktur von der Basisstruktur zur Deckstruktur hin zunimmt. Bei einer alternativen Ausführung ist die Plattform im Wesentlichen quaderförmig, wobei die Basis- und die Deckstruktur im Wesentlichen dieselbe horizontale Erstreckung aufweisen.

Um die Anordnung des ersten und zweiten Stabilisierungsauftriebskörpers in unterschiedlichen Höhenpositionen zu ermöglichen und gleichzeitig die Stabilität der Verbindungsstruktur zu erhöhen, sind die Längselemente mit dem ersten und zweiten Stabilisierungsauftriebskörper in der gemeinsamen Ebene in einem Winkel zueinander angeordnet, wobei vorzugsweise oberseitige Enden der Längselemente mit dem ersten und zweiten Stabilisierungsauftriebskörper an einer gemeinsamen Befestigungsstelle der Deckstruktur befestigt sind. Die unterseitigen Enden der Längselemente sind bei dieser bevorzugten Ausführung an voneinander beabstandeten Verbindungsstellen der Basisstruktur angebracht, wobei die Längselemente zur Deckstruktur hin zusammenlaufen und paarweise an der gemeinsamen Befestigungsstelle der Deckstruktur befestigt sind.

Um die schwimmende Plattform an die örtlichen Verhältnisse anzupassen, ist es von Vorteil, wenn der erste und der zweite Stabilisierungsauftriebskörper in Längsrichtung der Längselemente verschieblich mit den Längselementen der Verbindungsstruktur verbunden sind. Damit kann vorteilhafterweise eine Anpassung an das vorherrschende Wellenprofil, d.h. die standortspezifischen Wellenlängen und -höhen, vorgenommen werden. Bei dieser Ausführung liegen die Stabilisierungsauftriebskörper gesondert von den Längselementen vor. Bevorzugt sind die insbesondere rohrförmigen Stabilisierungsauftriebskörper an der Außenseite der Längselemente verschieblich gelagert. Die Stabilisierungsauftriebskörper weisen entlang des Auftriebs- bzw. Stabilisierungsabschnitts eine größere Querschnittsfläche als die Längselemente auf, welche ebenfalls eine geringe Auftriebswirkung haben können. Dadurch kann die relative Höhenposition der Stabilisierungsauftriebskörper zueinander verändert werden, wobei insbesondere der vertikale Überlappungsbereich zwischen den Stabilisierungsauftriebskörpern einstellbar ist.

Gemäß einer alternativen bevorzugten Ausführung sind der erste und der zweite Stabilisierungsauftriebskörper einteilig mit den Längselementen der Verbindungsstruktur verbunden. Bei dieser Ausführung sind daher die Stabilisierungsauftriebskörper integral mit den Längselementen gebildet, wobei die Stabilisierungsauftriebskörper insbesondere eine größere Querschnittsfläche als die Längselemente und damit ein größeres Verdrängungsvolumen aufweisen.

Zur einteiligen Ausbildung des ersten und zweiten Stabilisierungsauftriebskörpers mit den Längselementen der Verbindungsstruktur sind vorzugsweise Faser-Kunststoff-Verbundelemente vorgesehen sind. Bevorzugt sind die Verbundelemente aus glasfaserverstärktem Kunststoff gebildet. Diese Ausführung zeichnet sich durch ein besonders niedriges Gewicht aus, mit welchem der zur schwimmenden Anordnung der Plattform erforderliche Auftrieb gesenkt werden kann.

Wenn der erste und der zweite Stabilisierungsauftriebskörper an einer Seitenfläche der Plattform vorgesehen sind, kann das von den Stabilisierungsauftriebskörpern hervorgerufene Rückstellmoment gegenüber Kippkräften an der Plattform, insbesondere Windkräften, maximiert werden. Dadurch kann die Plattform bei Verkippungen aus der waagrechten Gleichgewichtslage zuverlässig in die Gleichgewichtslage zurückgeführt werden. Wenn die Windkräfte die Plattform an einer Stelle tiefer ins Wasser drücken, wird das unter Wasser liegende Verdrängungsvolumen der Stabilisierungsauftriebskörper an dieser Stelle erhöht, so dass die Plattform aufgrund der höheren Auftriebskraft in die waagrechte Ausgangslage gehoben wird. Entsprechend wird das unter Wasser liegende Verdrängungsvolumen der Stabilisierungsauftriebskörper reduziert, wenn die Plattform aufgrund von Windkräften an einer Stelle weiter aus dem Wasser gehoben wird. In der Folge kehrt die Plattform unter ihrem Eigengewicht in die waagrechte Gleichgewichtslage zurück. Durch die Anordnung der Stabilisierungsauftriebskörper an einer Seitenfläche, d.h. an der Außenseite der Plattform, kann ein maximales Rückstellmoment bezüglich einer Mittelachse der Plattform erzielt werden. Vorteilhafterweise kann so das Gesamtvolumen der Stabilisierungsauftriebskörper reduziert werden. Demgegenüber sind innere Längselemente, zwischen den Seitenflächen der Plattform, vorzugsweise frei von Stabilisierungsauftriebskörpern. Dadurch kann die Angriffsfläche der Plattform gering gehalten werden.

Um die Deckstruktur für die Montage rechteckiger Photovoltaikelemente auszugestalten, ist es von Vorteil, wenn die Plattform vier Seitenflächen aufweist, wobei zumindest ein erster und zumindest ein zweiter Stabilisierungsauftriebskörper an jeder Seitenfläche der Plattform vorgesehen sind. Vorzugsweise ist eine in Draufsicht rechteckige, insbesondere quadratische, Deckstruktur vorgesehen, welche mittels der Verbindungsstruktur mit der in Draufsicht ebenfalls rechteckigen bzw. quadratischen Basisstruktur verbunden ist. Bei dieser Ausführung weist die schwimmende Plattform vier Seitenflächen auf, welche jeweils mit Stabilisierungsauftriebskörpern des ersten und des zweiten Typs versehen sind. Vorteilhafterweise kann die ausgleichende Wirkung der Stabilisierungsauftriebskörpers auf diese Weise für alle Wellenrichtungen gleichermaßen genutzt werden. Bei alternativen Ausführungsvarianten weist die Plattform drei oder sechs Seitenflächen auf.

Um die Auswirkungen von Wellen auf die Lage der Plattform möglichst gering zu halten, ist es von Vorteil, wenn zumindest zwei, vorzugsweise genau zwei, erste Stabilisierungsauftriebskörper und zumindest zwei, vorzugsweise genau zwei, zweite Stabilisierungsauftriebskörper an jeder Seitenfläche der Plattform vorgesehen sind. Besonders bevorzugt ist daher eine Ausführung, bei welcher je zwei erste und zwei zweite Stabilisierungsauftriebskörper an allen vier Seitenflächen der schwimmenden Plattform vorgesehen sind. Vorzugsweise sind die beiden mittleren Stabilisierungsauftriebskörper jeder Seitenfläche vom zweiten Typ und weisen daher ein vergleichsweise kleines Verdrängungsvolumen unter Wasser auf, wogegen die beiden äußeren Stabilisierungsauftriebskörper vom ersten Typ mit einem vergleichsweise großen Verdrängungsvolumen unter Wasser ausgebildet sind.
Um die Stabilität der Plattform weiter zu erhöhen, ist es günstig, wenn an den vier Eckpunkten der Plattform Schwimmkörper mit im Wesentlichen gleichen Verdrängungsvolumina oberhalb und unterhalb der ebenen Wasseroberfläche angeordnet sind.

Um die Basisauftriebskörper möglichst weit unter Wasser anzuordnen und damit geringeren Wellenkräften auszusetzen, ist es vorteilhaft, wenn die Basisstruktur vorzugsweise im Wesentlichen waagrecht angeordnete, langgestreckte Basiselemente aufweist, an welchen jeweils ein Basisauftriebskörper angeordnet ist. Demnach sind die Basisauftriebskörper vollständig unter Wasser angeordnet. Die Basisauftriebskörper bewirken einen Basisauftrieb entsprechend dem Eigengewicht der schwimmenden Plattform. Durch die Positionierung der Basisauftriebskörper unter der Wasseroberfläche können die angreifenden Wellenkräfte reduziert werden. Zu diesem Zweck sind die Basisauftriebskörper in der Gleichgewichtslage der Plattform vorzugsweise in derselben waagrechten Ebene in einer waagrechten Ebene unter Wasser angeordnet. Die Basisauftriebskörper können sich jedoch alternativ auch in unterschiedlicher Tiefe befinden und daher nicht in derselben horizontalen Ebene liegen.

Zur Lastabtragung zwischen der Basisstruktur und der Deckstruktur ist es von Vorteil, wenn die Längselemente der Verbindungsstruktur mit Verbindungsstellen zwischen mehreren langgestreckten Basiselementen der Basisstruktur verbunden sind. Demnach sind zumindest zwei Basiselemente an einer Verbindungsstelle miteinander verbunden, an welcher zudem die Längselemente der Verbindungsstruktur befestigt sind. Vorzugsweise bilden die Basiselemente eine rechtwinkelige Gitterstruktur.

Zur Anordnung der Photovoltaikelemente ist es günstig, wenn die Deckstruktur mehrere langgestreckte Tragelemente aufweist, an deren Oberseite die Photovoltaikelemente befestigt sind. Vorzugsweise bilden die Tragelemente, wie die Basiselemente, eine rechtwinkelige Gitterstruktur.

Die Erfindung wird nachstehend anhand von in den Zeichnungen dargestellten bevorzugten Ausführungsbeispielen, auf die sie jedoch nicht beschränkt sein soll, weiter erläutert. In der Zeichnung zeigt:
Fig. 1 eine schaubildliche Ansicht einer erfindungsgemäßen schwimmenden Plattform, welche aus einer über Wasser angeordneten Deckstruktur mit Photovoltaikelementen, einer unter Wasser angeordneten Basisstruktur mit Basisauftriebskörpern und einer dazwischen angeordneten Verbindungsstruktur besteht, an welcher in vertikaler Richtung versetzt zueinander angeordnete Stabilisierungsauftriebskörper vorgesehen sind;
Fig. 2 eine weitere schaubildliche Ansicht der schwimmenden Plattform gemäß Fig. 1, jedoch ohne die Photovoltaikelemente;
Fig. 3 eine schematische Seitenansicht der schwimmenden Plattform gemäß Fig. 1, 2;

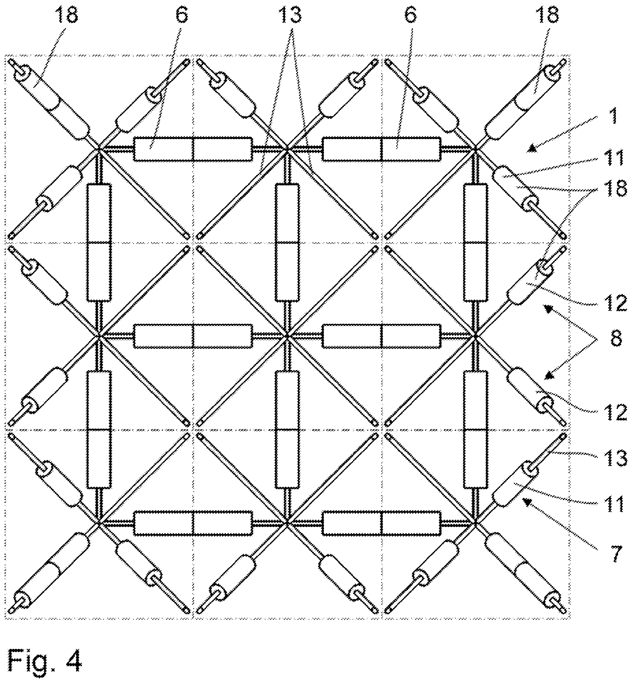

Fig. 4 eine Schnittansicht gemäß der Linie IV-IV in Fig. 3;
Fig. 5 eine schematische Seitenansicht gemäß einer alternativen Ausführungsform der Erfindung, bei welcher die Stabilisierungsauftriebskörper einteilig mit der Verbindungsstruktur zwischen der Deckstruktur und der Basisstruktur gebildet sind;
Fig. 6 eine schematische Ansicht eines Ausschnitts der Plattform gemäß Fig. 1 bis 3, auf welche Wellen mit einer Wellenphase von 90° auftreffen, wobei die Reduktion der Auftriebsdifferenz durch die versetzte Anordnung der Stabilisierungsauftriebskörper ersichtlich ist;
Fig. 7 eine schematische Ansicht gemäß Fig. 6, wobei die Situation bei einer Wellenphase von 270° dargestellt ist;
Fig. 8 schematisch einen Ausschnitt einer nicht Teil der Erfindung bildenden Plattform, bei welcher die Stabilisierungsauftriebskörper in derselben Höhenposition angeordnet sind;
Fig. 9 bis 12 verschiedene Ausführungen der Stabilisierungsauftriebskörper der erfindungsgemäßen Plattform; und
Fig. 13 schematisch die Kombination eines ersten Stabilisierungsauftriebskörpers gemäß Fig. 9 mit einem zweiten Stabilisierungsauftriebskörper gemäß Fig. 11, welche zudem in vertikaler Richtung zueinander versetzt sind.

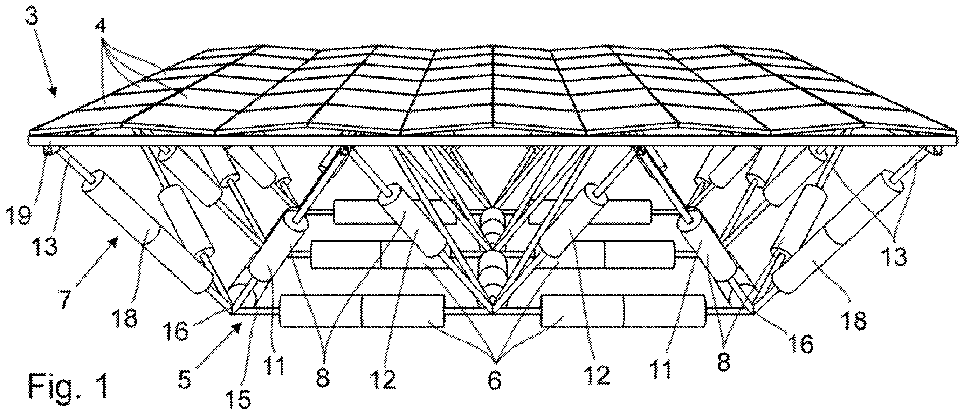

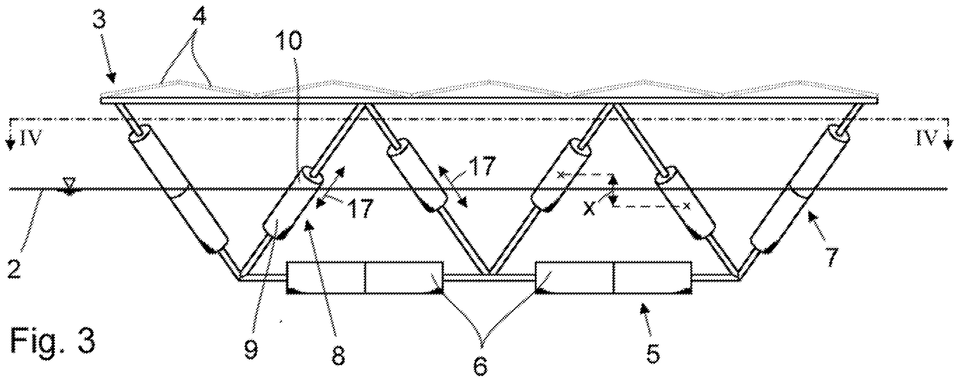

Fig. 1 zeigt eine schwimmende Plattform 1, welche als Halbtaucher (englisch: "Semi-Submersible") ausgebildet ist. Die Plattform 1 weist eine im Betrieb oberhalb einer ebenen Wasseroberfläche 2 (vgl. Fig. 3) angeordnete Deckstruktur 3 auf, an welcher an sich bekannte Photovoltaikelemente 4 montiert sind. Die Photovoltaikelemente 4 sind in der gezeigten Ausführung in mehreren Reihen angeordnet, welche paarweise um einen spitzen Winkel zur Horizontalen (d.h. zur ebenen Wasseroberfläche 2) geneigt sind. Weiters weist die Plattform 1 eine im Betrieb unterhalb der Wasseroberfläche 2 angeordnete Basisstruktur 5 auf, welche in der gezeigten Gleichgewichtslage im Wesentlichen waagrecht angeordnet ist. Um das Gewicht der Plattform 1 zu tragen, sind an der Basisstruktur mehrere Basisauftriebskörper 6 angeordnet, welche sich in der Gleichgewichtslage der Plattform 1 in der waagrechten Ebene der Basisstruktur 5 erstrecken. Schließlich weist die Plattform 1 eine durch die Wasseroberfläche 2 ragende Verbindungsstruktur 7 auf, welche die Deckstruktur 3 mit der Basisstruktur 5 verbindet.

Wie aus Fig. 1 bis 3 weiters ersichtlich, ist die Verbindungsstruktur 7 mit Stabilisierungsauftriebskörpern 8 verbunden, welche durch die Wasseroberfläche 2 durchtretend teils oberhalb, teils unterhalb der Wasseroberfläche 2 angeordnet sind. Die Stabilisierungsauftriebskörper 8 bestehen daher aus einem unterhalb der ebenen Wasseroberfläche 2 angeordneten Auftriebsabschnitt 9 und einem oberhalb der ebenen Wasseroberfläche 2 angeordneten Stabilisierungsabschnitt 10 (vgl. Fig. 3), welche in der gezeigten Ausführung denselben Querschnitt aufweisen.

Wie aus Fig. 1 bis 3 weiters ersichtlich, sind zwei Arten von Stabilisierungsauftriebskörpern 8 vorgesehen, welche sich im unter Wasser befindlichen (Verdrängungs-)Volumen unterscheiden, das die Auftriebskraft auf die Plattform 1 bestimmt. Demnach weist ein erster Stabilisierungsauftriebskörper 11 am Auftriebsabschnitt 9 ein größeres Verdrängungsvolumen und am Stabilisierungsabschnitt 10 ein kleineres Verdrängungsvolumen als ein zweiter Stabilisierungsauftriebskörper 12 auf.

Wie aus Fig. 1 bis 3 weiters ersichtlich, weisen der erste 11 und der zweite Stabilisierungsauftriebskörper 12 im Wesentlichen dieselbe Länge und dieselbe Querschnittsfläche auf, jedoch sind der erste 11 und der zweite Stabilisierungskörper 12 in Richtung senkrecht zur ebenen Wasseroberfläche 2, d.h. in vertikaler Richtung, um eine Strecke x (vgl. Fig. 3) versetzt zueinander angeordnet.

Wie aus Fig. 1 bis 3 weiters ersichtlich, weist die Verbindungsstruktur 7 langgestreckte Längselemente 13 auf, welche die Deckstruktur 3 mit der Basisstruktur 5 verbinden. Die Stabilisierungsauftriebskörper 8 sind mit einzelnen Längselementen 13 der Verbindungsstruktur 7 verbunden. Um die stabilisierende Wirkung der Stabilisierungsauftriebskörper 8 unabhängig von der Wellenrichtung zu erzielen, sind der erste 11 und der zweite Stabilisierungsauftriebskörper 12 mit benachbarten, d.h. nebeneinander angeordneten, Längselementen 13 der Verbindungsstruktur 7 verbunden.

Wie aus Fig. 1 bis 3 weiters ersichtlich, weist die Plattform 1 in der gezeigten Ausführung genau vier Seiten- bzw. Außenflächen auf, an denen die einlaufenden Wellen zuerst auftreffen. An jeder Seitenfläche der Plattform 1 sind genau zwei erste Stabilisierungsauftriebskörper 11 und genau zwei zweite Stabilisierungsauftriebskörper 12 angeordnet. Dagegen sind die inneren Längselemente 13 der Plattform 1, welche nicht an den Seiten- bzw. Außenflächen der Plattform 1 angeordnet sind, frei von Stabilisierungsauftriebskörpern 8. Dadurch kann die Gesamtquerschnittsfläche der Stabilisierungsauftriebskörper 8 an der Wasserlinie minimiert werden. Die Längselemente 13 mit den ersten 11 und zweiten Stabilisierungsauftriebskörpern 12 sind an den Seitenflächen der Plattform 1 jeweils in einer gemeinsamen Ebene angeordnet, welche in der gezeigten Ausführung zur Vertikalen geneigt ist. Dadurch weist die Deckstruktur 3 eine größere horizontale Erstreckung als die Basisstruktur 5 auf.

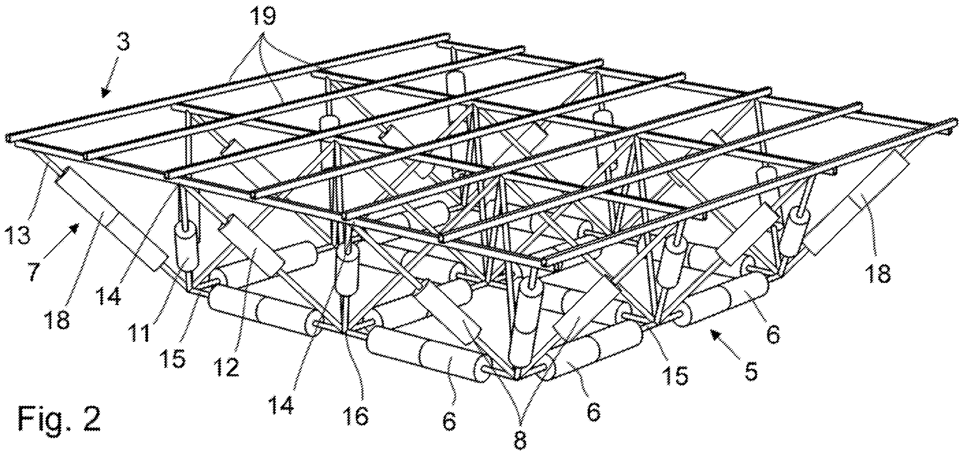

Wie aus Fig. 1 bis 3 weiters ersichtlich, sind die Längselemente 13 mit den ersten 11 und zweiten Stabilisierungsauftriebskörpern 12 an den Seitenflächen der Plattform 1 paarweise in einem Winkel zueinander angeordnet. Dabei sind die ober- bzw. deckseitigen Enden zweier Längselemente 13, welche je einen ersten 11 und einen zweiten Stabilisierungsauftriebskörper 12 tragen, an einer gemeinsamen Befestigungsstelle 14 (vgl. Fig. 2) der Deckstruktur 3 befestigt. Ausgehend von der gemeinsamen Befestigungsstelle 14 laufen die Längselemente 14 nach unten, in Richtung der Basisstruktur 5 auseinander.

Wie aus Fig. 1 bis 3 weiters ersichtlich, weist die Basisstruktur 5 in der gezeigten Gleichgewichtslage im Wesentlichen waagrecht angeordnete, langgestreckte Basiselemente 15 auf, wobei an jedem Basiselement 15 genau ein Basisauftriebskörper 6 angeordnet ist. Die Basiselemente 15 bilden in der gezeigten Ausführung eine rechtwinkelige Gitterstruktur. Die Längselemente 13 der Verbindungsstruktur 7, an denen die Stabilisierungsauftriebskörper 8 angeordnet sind, greifen jeweils an einer Verbindungsstelle 16 an, welche als Knotenpunkt zwischen zwei der langgestreckten Basiselemente 15 der Basisstruktur 5 gebildet ist.

Wie in Fig 3 mit Pfeilen 17 veranschaulicht, sind der erste 11 und der zweite Stabilisierungsauftriebskörper 12 bei der gezeigten Ausführungsform der Plattform 1 in Längsrichtung der Längselemente 13 verschieblich auf den Längselementen 13 der Verbindungsstruktur 7 angeordnet. Dadurch ist das Verhältnis zwischen dem Auftriebsabschnitt 9 und dem Stabilisierungsabschnitt 10 jedes Stabilisierungsauftriebskörpers 8 einstellbar. In der gezeigten Ausführung können die Stabilisierungsauftriebskörper 8 hohl und/oder aus einem Material mit einer geringeren Dichte als (Meer-)Wasser gebildet sein. Beispielsweise können die Stabilisierungsauftriebskörper durch ein Füllmaterial, insbesondere EPS, XPS oder PUR, und ein das Füllmaterial umgebendes Mantelmaterial, insbesondere Blech bzw. Aluminium oder ein plattenförmiges Kunststoffmaterial, vorzugsweise PE oder PVC) oder eine Folie, vorzugsweise ebenfalls aus PE oder PVC, gebildet sein.

Wie aus Fig. 1 bis 3 weiters ersichtlich, weist die Plattform 1 an den vier Eckpunkten Schwimmkörper 18 auf, welche im Wesentlichen dieselben Verdrängungsvolumina oberhalb und unterhalb der ebenen Wasseroberfläche 2 aufweisen. In der gezeigten Ausführung sind die Schwimmkörper 18 im Wesentlichen ident ausgebildet.

Wie aus Fig. 1 bis 3 weiters ersichtlich, weist die Deckstruktur 3 mehrere langgestreckte Trag- bzw. Profilelemente 19 auf, welche eine rechtwinkelige Gitterstruktur bilden. An der Oberseite der Tragelemente 19 sind die Photovoltaikelemente 4 montiert.

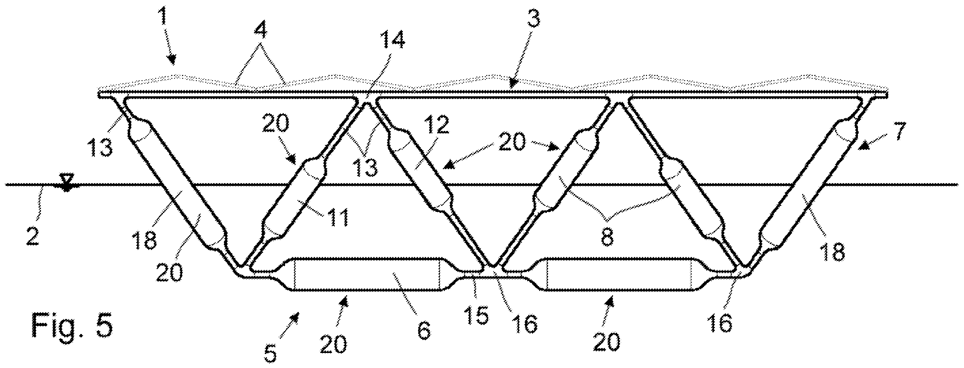

In Fig. 5 ist eine alternative Ausführung der Plattform 1 gezeigt, bei welcher die ersten 11 und zweiten Stabilisierungsauftriebskörper 12 einteilig bzw. integral mit den Längselementen 13 der Verbindungsstruktur 7 verbunden sind. Zur einteiligen Ausbildung der ersten 11 und zweiten Stabilisierungsauftriebskörper 12 mit den Längselementen 13 der Verbindungsstruktur 7 sind hohle Faser-Kunststoff-Verbundelemente 20, vorzugsweise aus kohlenstofffaserverstärktem Kunststoff, vorgesehen. Die Faser-Kunststoff-Verbundelemente 20 weisen im Bereich der Stabilisierungsauftriebskörper 8 einen größeren Querschnitt als im Bereich der Längselemente 13 auf, welche an der Basisstruktur 5 bzw. an der Deckstruktur 3 befestigt sind. In der gezeigten Ausführung sind zudem die Basisauftriebskörper 6 und die Schwimmkörper 18 aus Faser-Kunststoff-Verbundelementen 20 gebildet. Zu diesem Zweck weisen die Faser-Kunststoff-Verbundelemente 20 an den Basisauftriebskörpern 6 bzw. an den Schwimmkörper 18 eine größere Querschnittsfläche als an den zugehörigen Längselementen 13 bzw. Basiselementen 15 auf. Selbstverständlich könnten jedoch auch die in Fig. 1 bis 3 gezeigten Schwimmkörper 18 und Basisauftriebskörper 6, welche von den Längselementen 13 bzw. den Basiselementen 16 gesondert vorliegen, in Kombination mit Faser-Kunststoff-Verbundelementen 20 für die Längselemente 13 mit den Stabilisierungsauftriebskörpern 8 verwendet werden.

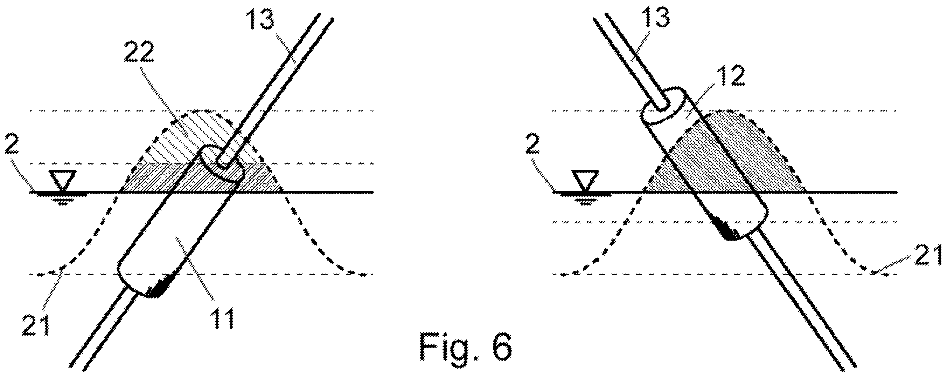

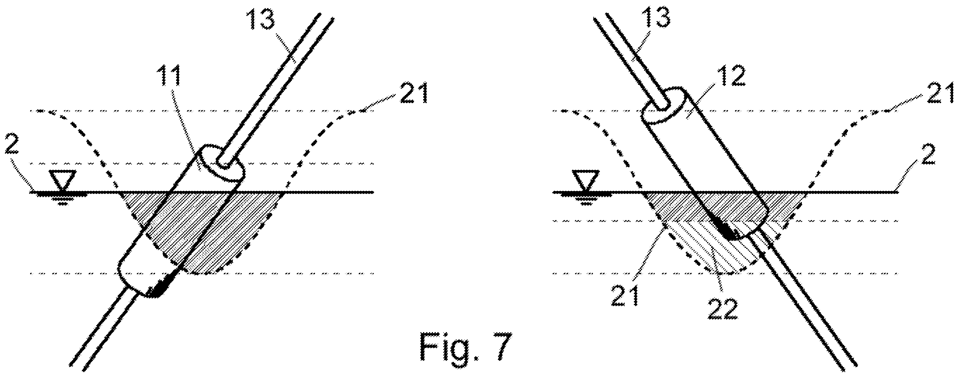

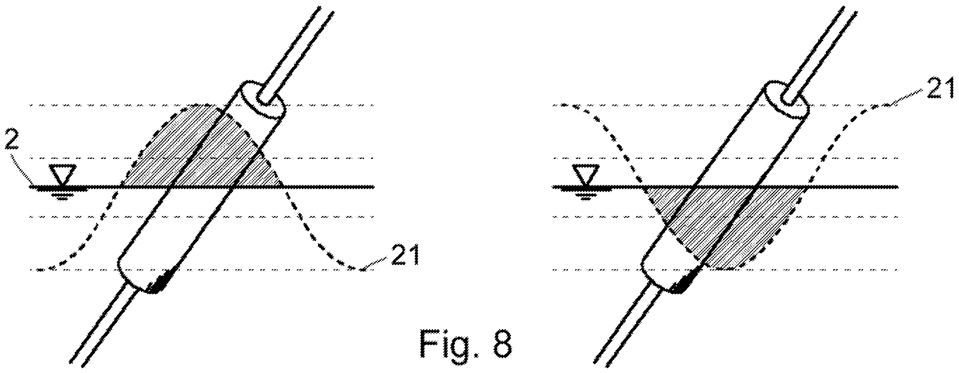

In den Fig. 6, 7 ist schematisch die Funktion der Stabilisierungsauftriebskörper 8 der schwimmenden Plattform 1 beim Eintreffen von Wellen 21 unterschiedlicher Phasenlage veranschaulicht. Fig. 8 zeigt zum Vergleich einen herkömmlichen Auftriebskörper an der Wasseroberfläche 2, welcher entsprechend den Schwimmkörpern 18 an den Ecken der Plattform 1 symmetrisch zur Wasseroberfläche 2 ausgebildet ist. Im Folgenden wird eine Anströmrichtung von 0° angenommen, wobei auf eine Seitenfläche der Plattform 1 nur eine Wellenphase wirkt. Aufgrund der relativen Nähe der unsymmetrisch bezüglich der Wasseroberfläche 2 angeordneten Stabilisierungsauftriebskörper 8 zueinander kann die stabilisierende Wirkung jedoch unabhängig von der Wellenrichtung erzielt werden. Die Kombination von höherliegenden 12 und tieferliegenden Stabilisierungsauftriebskörpern 11, wie in Fig. 6, 7 ersichtlich, bewirkt im Vergleich zu dem durchgehenden Schwimmkörper der Fig. 8 ein ruhigeres Schwimmverhalten der Plattform 1, welches sich auf die reduzierte Auftriebsdifferenz beim Auftreten von Wellen 21 zurückführen lässt. Zum besseren Verständnis kann der tieferliegende, erste Stabilisierungsauftriebskörper 8 und der höherliegende, zweite Stabilisierungsauftriebskörper 8 als Einheit gesehen werden. In den Fig. 6, 7 sind die ungünstigsten Lastfälle dargestellt, bei welchen jeweils Wellenkämme (Fig. 6) bzw. Wellentäler (Fig. 7) auf die benachbarten Stabilisierungsauftriebskörper 8 auftreffen. Durch die Wellen 21 ändert sich die lokal auf die Plattform 1 wirkende Auftriebskraft. Gemäß Fig. 6 werden die Stabilisierungsauftriebskörper 8 tiefer im Wasser angeordnet, so dass die Auftriebskraft lokal erhöht wird. Demgegenüber werden die Stabilisierungsauftriebskörper 8 gemäß Fig. 7 weiter aus dem Wasser gehoben, wodurch die Auftriebskraft lokal gesenkt wird. Dadurch können Kippkräfte entstehen, welche das Gleichgewicht der Plattform beeinträchtigen können. Durch die versetzte Anordnung der Stabilisierungsauftriebskörper 8 werden die auf die Plattform 1 wirkenden Kippkräfte verringert, indem die Auftriebsdifferenz im Vergleich zur Bauweise der Fig. 8 mit zwei durchgehenden Schwimmkörpern reduziert wird (vgl. den leicht schraffierten Bereich 22 in Fig. 6, 7).

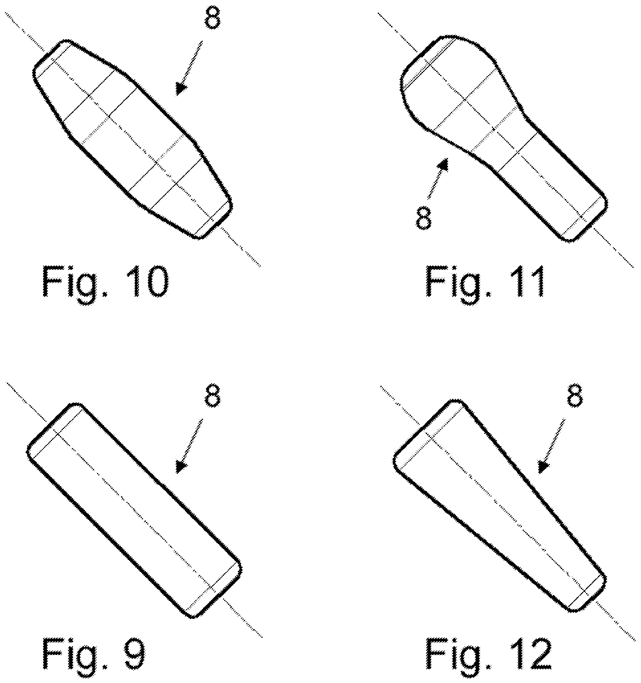

In den Fig. 9 bis 12 sind verschiedene Ausführungen der Stabilisierungsauftriebskörper 8 der Plattform 1 gezeigt.

Gemäß Fig. 9 ist der Querschnitt des Stabilisierungsauftriebskörpers 8 in Richtung der Längsachse des Stabilisierungsauftriebskörpers 8 (vgl. die strichliert-punktierte Linie in Fig. 9) im Wesentlichen konstant, wobei der Stabilisierungsauftriebskörper 8 abgerundete Endabschnitte aufweist. Gemäß Fig. 10 weist der Stabilisierungsauftriebskörper 8 einen in Längsrichtung variierenden Querschnitt auf, wobei der Stabilisierungsauftriebskörper 8 im Wesentlichen dasselbe Volumen oberhalb und unterhalb seiner Symmetrie- bzw. Mittelebene senkrecht zur Längsrichtung aufweist. Bei dieser Ausführung werden mehrere idente Stabilisierungsauftriebskörper 8 gemäß Fig. 9 oder 10 an der Plattform 1 montiert, wobei die Volumenschwerpunkte der Stabilisierungsauftriebskörper 8 in Richtung senkrecht zur ebenen Wasseroberfläche 2 versetzt zueinander angeordnet sind (vgl. Fig. 1).

Gemäß Fig. 11, 12 ist der Stabilisierungsauftriebskörper 8 in Längsrichtung unsymmetrisch ausgebildet. In der Ausführung der Fig. 11 weist der Stabilisierungsauftriebskörper 8 an einem unteren Längsabschnitt einen konstanten Querschnitt und an einem oberen Längsabschnitt eine bauchige Verbreiterung gegenüber dem unteren Längsabschnitt auf. In der Ausführung der Fig. 11 nimmt die Querschnittsfläche des Stabilisierungsauftriebskörpers 8 von dem unteren Längsabschnitt zum oberen Längsabschnitt hin kontinuierlich zu. Solche Stabilisierungsauftriebskörper 8 können in derselben Höhenposition an der Plattform 1 montiert werden, wobei der erste Stabilisierungsauftriebskörper 11 in der gezeigten Anordnung und der zweite Stabilisierungsauftriebskörper 12 in einer um 180° gewendeten Anordnung an der Plattform 1 montiert ist. Dadurch wird der Volumenschwerpunkt des ersten Stabilisierungsauftriebskörpers 11 in vertikaler Richtung oberhalb des Volumenschwerpunkts des zweiten Stabilisierungsauftriebskörpers 12 positioniert.

Die verschiedenen Stabilisierungskörper 8 sowie gegebenenfalls deren vertikaler Versatz zueinander können in beliebiger Weise miteinander kombiniert werden, solange sichergestellt ist, dass der erste Stabilisierungsauftriebskörper 11 am Auftriebsabschnitt 9 im montierten Zustand an der Plattform 1 ein größeres Verdrängungsvolumen und am Stabilisierungsabschnitt 10 ein kleineres Verdrängungsvolumen jeweils im Vergleich zu dem zweiten Stabilisierungsauftriebskörper 12 aufweist.

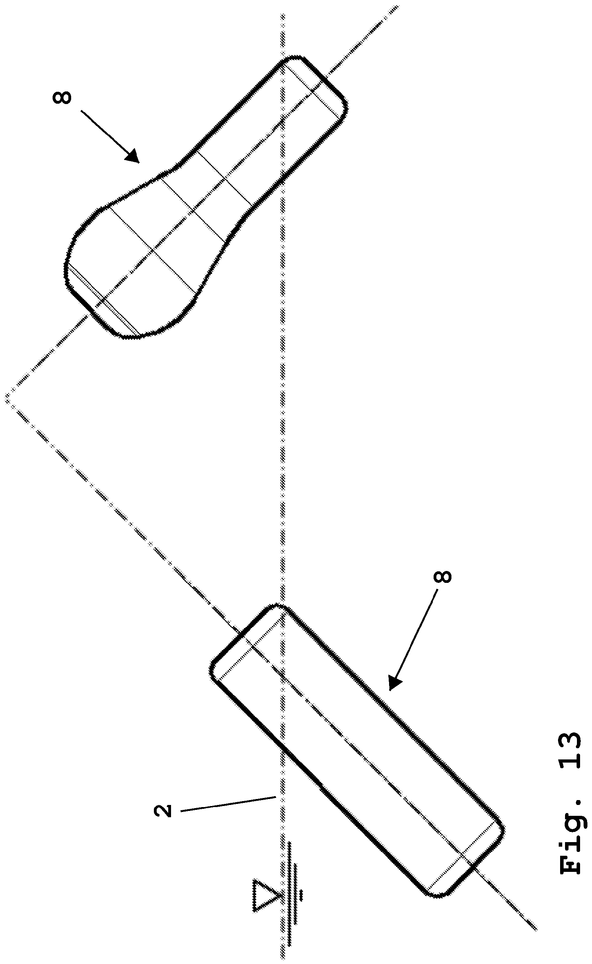

Zur Illustration dieses Prinzips ist in Fig. 13 schematisch die Kombination eines Stabilisierungsauftriebskörpers 8 gemäß Fig. 9 mit einem Stabilisierungsauftriebskörper 8 gemäß Fig. 11 gezeigt, welche zudem in vertikaler Richtung zueinander versetzt angeordnet sind.

## Patentansprüche

1. Schwimmende Plattform (1) mit einer Deckstruktur (3) zur Anordnung von Photovoltaikelementen (4), mit einer im Betrieb unterhalb einer ebenen Wasseroberfläche (2) angeordneten Basisstruktur (5), an welcher zumindest ein Basisauftriebskörper (6) angeordnet ist, und mit einer die Basisstruktur (5) mit der Deckstruktur (6) verbindenden Verbindungsstruktur (7), an welcher durch die ebene Wasseroberfläche (2) durchtretende Stabilisierungsauftriebskörper (8; 11, 12) angeordnet sind, wobei die Stabilisierungsauftriebskörper (8; 11, 12) jeweils einen unterhalb der ebenen Wasseroberfläche (2) angeordneten Auftriebsabschnitt (9) und einen oberhalb der ebenen Wasseroberfläche (2) angeordneten Stabilisierungsabschnitt (10) aufweisen, **dadurch gekennzeichnet, dass** ein erster Stabilisierungsauftriebskörper (11) und ein zweiter Stabilisierungsauftriebskörper (12) im wellenfreien Gleichgewichtszustand so angeordnet sind, dass der erste Stabilisierungsauftriebskörper (11) am Auftriebsabschnitt (9) ein größeres Verdrängungsvolumen und am Stabilisierungsabschnitt (10) ein kleineres Verdrängungsvolumen als der zweite Stabilisierungsauftriebskörper (12) aufweist, wobei die Verbindungsstruktur (8) zwischen der Deckstruktur (3) und der Basisstruktur (5) erstreckte Längselemente (13) aufweist, wobei der erste (11) und der zweite Stabilisierungsauftriebskörper (12) jeweils mit einem Längselement (13) der Verbindungsstruktur (7) verbunden sind, wobei die Längselemente (13) mit dem ersten (11) und zweiten Stabilisierungsauftriebskörper (12) in einer gemeinsamen Ebene angeordnet sind, wobei die Längselemente (13) mit dem ersten (11) und zweiten Stabilisierungsauftriebskörper (12) in der gemeinsamen Ebene in einem Winkel zueinander angeordnet sind.

2. Schwimmende Plattform (1) nach Anspruch 1, **dadurch gekennzeichnet, dass** der erste (11) und der zweite Stabilisierungsauftriebskörper (12) im Wesentlichen dieselbe Länge und denselben Querschnittsverlauf aufweisen, wobei der erste (11) und der zweite Stabilisierungsauftriebskörper (12) in Richtung senkrecht zur ebenen Wasseroberfläche (2) um eine Strecke (x) versetzt zueinander angeordnet sind.

3. Schwimmende Plattform (1) nach Anspruch 1 oder 2, **dadurch gekennzeichnet, dass** der erste (11) und der zweite Stabilisierungsauftriebskörper (12) mit benachbarten Längselementen (13) der Verbindungsstruktur (7) verbunden sind.

4. Schwimmende Plattform (1) nach einem der Ansprüche 1 bis 3, **dadurch gekennzeichnet, dass** die gemeinsamen Ebene, in der die Längselemente (13) mit dem ersten (11) und zweiten Stabilisierungsauftriebskörper (12) angeordnet sind, zur Vertikalen geneigt ist.

5. Schwimmende Plattform (1) nach einem der Ansprüche 1 bis 4, **dadurch gekennzeichnet**, oberseitige Enden der Längselemente (13) mit dem ersten (11) und zweiten Stabilisierungsauftriebskörper (12) an einer gemeinsamen Befestigungsstelle (14) der Deckstruktur (3) befestigt sind.

6. Schwimmende Plattform (1) nach einem der Ansprüche 1 bis 5, **dadurch gekennzeichnet, dass** der erste (11) und der zweite Stabilisierungsauftriebskörper (12) in Längsrichtung (17) der Längselemente (13) verschieblich mit den Längselementen (13) der Verbindungsstruktur verbunden sind.

7. Schwimmende Plattform (1) nach einem der Ansprüche 1 bis 5, **dadurch gekennzeichnet, dass** der erste (11) und der zweite Stabilisierungsauftriebskörper (12) einteilig mit den Längselementen (13) der Verbindungsstruktur (7) verbunden sind.

8. Schwimmende Plattform (1) nach Anspruch 7, **dadurch gekennzeichnet, dass** Faser-Kunststoff-Verbundelemente (20) zur einteiligen Ausbildung des ersten (11) und zweiten Stabilisierungsauftriebskörpers (12) mit den Längselementen (13) der Verbindungsstruktur (7) vorgesehen sind.

9. Schwimmende Plattform (1) nach einem der Ansprüche 1 bis 8, **dadurch gekennzeichnet, dass** der erste (11) und der zweite Stabilisierungsauftriebskörper (12) an einer Seitenfläche der Plattform (1) vorgesehen sind.

10. Schwimmende Plattform (1) nach Anspruch 9, **dadurch gekennzeichnet, dass** die Plattform (1) vier Seitenflächen aufweist, wobei zumindest ein erster (11) und zumindest ein zweiter Stabilisierungsauftriebskörper (12) an jeder Seitenfläche der Plattform (1) vorgesehen sind.

11. Schwimmende Plattform (1) nach Anspruch 10, **dadurch gekennzeichnet, dass** zumindest zwei, vorzugsweise genau zwei, erste Stabilisierungsauftriebskörper (11) und zumindest zwei, vorzugsweise genau zwei, zweite Stabilisierungsauftriebskörper (12) an jeder Seitenfläche der Plattform (1) vorgesehen sind.

12. Schwimmende Plattform (1) nach einem der Ansprüche 1 bis 11, **dadurch gekennzeichnet, dass** an den vier Eckpunkten der Plattform (1) Schwimmkörper (18) mit im Wesentlichen gleichen Verdrängungsvolumina oberhalb und unterhalb der ebenen Wasseroberfläche (2) angeordnet sind.

13. Schwimmende Plattform (1) nach einem der Ansprüche 1 bis 12, **dadurch gekennzeichnet, dass** die Basisstruktur (5) im Wesentlichen waagrecht angeordnete, langgestreckte Basiselemente (6) aufweist, an welchen jeweils ein Basisauftriebskörper (6) angeordnet ist.

14. Schwimmende Plattform (1) nach Anspruch 13, **dadurch gekennzeichnet, dass** die Längselemente (13) der Verbindungsstruktur (7) mit Verbindungsstellen (16) zwischen mehreren langgestreckten Basiselementen (15) der Basisstruktur (5) verbunden sind.

15. Schwimmende Plattform (1) nach einem der Ansprüche 1 bis 14, **dadurch gekennzeichnet, dass** die Deckstruktur (3) mehrere langgestreckte Tragelemente (19) aufweist, an deren Oberseite die Photovoltaikelemente (4) befestigt sind.

## Claims

1. Floating platform (1) comprising a deck structure (3) for arranging photovoltaic elements (4), a base structure (5) which is arranged below a level water surface (2) during operation and on which at least one base buoyancy member (6) is arranged, and a connecting structure (7) which connects the base structure (5) to the deck structure (6) and on which stabilising buoyancy members (8; 11, 12) are arranged that pass through the level water surface (2), the stabilising buoyancy members (8; 11, 12) each having a buoyancy portion (9) arranged below the level water surface (2) and a stabilising portion (10) arranged above the level water surface (2), **characterised in that** a first stabilising buoyancy member (11) and a second stabilising buoyancy member (12) are arranged, in a wave-free state of equilibrium, such that the first stabilising buoyancy member (11) has a larger displacement volume on the buoyancy portion (9) and a smaller displacement volume on the stabilizing portion (10) than the second stabilising buoyancy member (12), the connecting structure (8) comprising longitudinal elements (13) that extend between the deck structure (3) and the base structure (5), the first stabilising buoyancy member (11) and the second stabilising buoyancy member (12) each being connected to a longitudinal element (13) of the connecting structure (7), the longitudinal elements (13) being arranged in a common plane, together with the first stabilising buoyancy member (11) and the second stabilising buoyancy member (12), the longitudinal elements (13) being arranged at an angle to one another in the common plane, together with the first stabilising buoyancy member (11) and the second stabilising buoyancy member (12).

2. Floating platform (1) according to claim 1, **characterised in that** the first stabilising buoyancy member (11) and the second stabilising buoyancy member (12) have substantially the same length and the same cross-section profile, the first stabilising buoyancy member (11) and the second stabilising buoyancy member (12) being arranged offset from one another by a distance (x) in a direction perpendicular to the level water surface (2).

3. Floating platform (1) according to either claim 1 or claim 2, **characterised in that** the first stabilising buoyancy member (11) and the second stabilising buoyancy member (12) are connected to adjacent longitudinal elements (13) of the connecting structure (7).

4. Floating platform (1) according to any of claims 1 to 3, **characterised in that** the common plane in which the longitudinal elements (13) are arranged, together with the first stabilising buoyancy member (11) and the second stabilising buoyancy member (12), is inclined with respect to the vertical.

5. Floating platform (1) according to any of claims 1 to 4, **characterised in that** top ends of the longitudinal elements (13), together with the first stabilising buoyancy member (11) and the second stabilising buoyancy member (12), are attached to a common attachment point (14) of the deck structure (3).

6. Floating platform (1) according to any of claims 1 to 5, **characterised in that** the first stabilising buoyancy member (11) and the second stabilising buoyancy member (12) are connected to the longitudinal elements (13) of the connecting structure in a manner movable in the longitudinal direction (17) of the longitudinal elements (13).

7. Floating platform (1) according to any of claims 1 to 5, **characterised in that** the first stabilising buoyancy member (11) and the second stabilising buoyancy member (12) are connected to the longitudinal elements (13) of the connecting structure (7) in one piece.

8. Floating platform (1) according to claim 7, **characterised in that** fibre-plastics composite elements (20) are provided for forming the first stabilising buoyancy member (11) and the stabilising buoyancy member (12) in one piece with the longitudinal elements (13) of the connecting structure (7).

9. Floating platform (1) according to any of claims 1 to 8, **characterised in that** the first stabilising buoyancy member (11) and the second stabilising buoyancy member (12) are provided on a side of the platform (1).

10. Floating platform (1) according to claim 9, **characterised in that** the platform (1) has four sides, at least one first stabilising buoyancy member (11) and at least one second stabilising buoyancy member (12) being provided on each side of the platform (1).

11. Floating platform (1) according to claim 10, **characterised in that** at least two, preferably exactly two, first stabilising buoyancy members (11) and at least two, preferably exactly two, second stabilising buoyancy members (12) are provided on each side of the platform (1).

12. Floating platform (1) according to any of claims 1 to 11, **characterised in that** floating members (18) having substantially the same displacement volumes are arranged above and below the level water surface (2) at the four corners of the platform (1).

13. Floating platform (1) according to any of claims 1 to 12, **characterised in that** the base structure (5) has substantially horizontally arranged, elongate base elements (6), on each of which a base buoyancy member (6) is arranged.

14. Floating platform (1) according to claim 13, **characterised in that** the longitudinal elements (13) of the connecting structure (7) are connected to connection points (16) between a plurality of elongate base elements (15) of the base structure (5).

15. Floating platform (1) according to any of claims 1 to 14, **characterised in that** the deck structure (3) has a plurality of elongate support elements (19), on top of which the photovoltaic elements (4) are attached.

## Revendications

1. Plateforme flottante (1) avec une structure de pont (3) destinée à la disposition d'éléments photovoltaïques (4), avec une structure de base (5) qui, pendant le fonctionnement, est disposée au-dessous d'une surface d'eau (2) plane et sur laquelle est disposé au moins un flotteur de base (6), et avec une structure de raccordement (7) qui raccorde la structure de base (5) à la structure de pont (6) et sur laquelle sont disposés des flotteurs de stabilisation (8 ; 11, 12) traversant la surface d'eau (2) plane, les flotteurs de stabilisation (8; 11, 12) comportant respectivement un tronçon de flottaison (9) disposé au-dessous de la surface d'eau (2) plane et un tronçon de stabilisation (10) disposé au-dessus de la surface d'eau (2) plane, **caractérisée en ce qu'**un premier flotteur de stabilisation (11) et un deuxième flotteur de stabilisation (12) sont, dans l'état d'équilibre dépourvu de vagues, disposés de telle sorte que le premier flotteur de stabilisation (11) présente sur le tronçon de flottaison (9) un déplacement volumétrique plus élevé et, sur le tronçon de stabilisation (10), un déplacement volumétrique plus faible que le deuxième flotteur de stabilisation (12), la structure de raccordement (8) présentant des éléments longitudinaux (13) s'étendant entre la structure de pont (3) et la structure de base (5), le premier (11) et le deuxième flotteur de stabilisation (12) étant respectivement raccordés à un élément longitudinal (13) de la structure de raccordement (7), les éléments longitudinaux (13) avec le premier (11) et le deuxième flotteur de stabilisation (12) étant disposés dans un plan commun, les éléments longitudinaux (13) avec le premier (11) et le deuxième flotteur de stabilisation (12) étant disposés dans le plan commun en formant un angle entre eux.

2. Plateforme flottante (1) selon la revendication 1, **caractérisée en ce que** le premier (11) et le deuxième flotteur de stabilisation (12) présentent essentiellement la même longueur et le même profil de section transversale, le premier (11) et le deuxième flotteur de stabilisation (12) étant décalés l'un par rapport à l'autre d'une distance (x) dans une direction perpendiculaire à la surface d'eau (2) plane.

3. Plateforme flottante (1) selon la revendication 1 ou 2, **caractérisée en ce que** le premier (11) et le deuxième flotteur de stabilisation (12) sont raccordés à des éléments longitudinaux (13) voisins de la structure de raccordement (7).

4. Plateforme flottante (1) selon l'une des revendications 1 à 3, **caractérisée en ce que** le plan commun dans lequel sont disposés les éléments longitudinaux (13) avec le premier (11) et le deuxième flotteur de stabilisation (12) est incliné par rapport à la verticale.

5. Plateforme flottante (1) selon l'une des revendications 1 à 4, **caractérisée en ce que** des extrémités, côté supérieur, des éléments longitudinaux (13) avec le premier (11) et le deuxième flotteur de stabilisation (12) sont fixées dans un emplacement de fixation (14) commun de la structure de pont (3).

6. Plateforme flottante (1) selon l'une des revendications 1 à 5, **caractérisée en ce que** le premier (11) et le deuxième flotteur de stabilisation (12) sont raccordés aux éléments longitudinaux (13) de la structure de raccordement de façon coulissante dans la direction longitudinale (17) des éléments longitudinaux (13).

7. Plateforme flottante (1) selon l'une des revendications 1 à 5, **caractérisée en ce que** le premier (11) et le deuxième flotteur de stabilisation (12) sont raccordés en une seule pièce aux éléments longitudinaux (13) de la structure de raccordement (7).

8. Plateforme flottante (1) selon la revendication 7, **caractérisée en ce que** des éléments composites fibre-matière plastique (20) sont prévus pour la constitution en une seule pièce du premier (11) et du deuxième flotteur de stabilisation (12) avec les éléments longitudinaux (13) de la structure de raccordement (7).

9. Plateforme flottante (1) selon l'une des revendications 1 à 8, **caractérisée en ce que** le premier (11) et le deuxième flotteur de stabilisation (12) sont prévus sur une surface latérale de la plateforme (1).

10. Plateforme flottante (1) selon la revendication 9, **caractérisée en ce que** la plateforme (1) comporte quatre surfaces latérales, au moins un premier (11) et au moins un deuxième flotteur de stabilisation (12) étant prévus sur chaque surface latérale de la plateforme (1).

11. Plateforme flottante (1) selon la revendication 10, **caractérisée en ce qu'**au moins deux, de préférence précisément deux, premiers flotteurs de stabilisation (11) et au moins deux, de préférence précisément deux, deuxième flotteurs de stabilisation (12) sont prévus sur chaque surface latérale de la plateforme (1).

12. Plateforme flottante (1) selon l'une des revendications 1 à 11, **caractérisée en ce que** des corps flottants (18) avec des déplacements volumétriques essentiellement identiques sont disposés au-dessus et au-dessous de la surface d'eau (2) plane aux quatre coins de la plateforme (1).

13. Plateforme flottante (1) selon l'une des revendications 1 à 12, **caractérisée en ce que** la structure de base (5) comporte des éléments de base (6) allongés, disposés essentiellement horizontalement, sur lesquels est disposé respectivement un flotteur de base (6).

14. Plateforme flottante (1) selon la revendication 13, **caractérisée en ce que** les éléments longitudinaux (13) de la structure de raccordement (7) sont raccordés à des emplacements de raccordement (16) entre plusieurs éléments de base (15) allongés de la structure de base (5).

15. Plateforme flottante (1) selon l'une des revendications 1 à 14, **caractérisée en ce que** la structure de pont (3) comporte plusieurs éléments de support (19) allongés, sur le côté supérieur desquels sont fixés les éléments photovoltaïques (4).
